# EUROPEAN PATENT SPECIFICATION

(11) **EP 4 392 245 B1**
(45) Date of publication and mention of the grant of the patent: **06.05.2026**
(21) Application number: 22712940.0
(22) Date of filing: 15.03.2022
(51) Int. Cl.: B30B 15/14, B26D 5/08, B26F 1/40, B41F 13/004, B41F 13/008

(54) **PACKAGING MATERIAL PROCESSING MACHINE AND METHOD FOR OPERATING A PACKAGING MATERIAL PROCESSING MACHINE**
MASCHINE ZUR VERARBEITUNG VON VERPACKUNGSMATERIAL UND VERFAHREN ZUM BETRIEB EINER MASCHINE ZUR VERARBEITUNG VON VERPACKUNGSMATERIAL
MACHINE DE TRAITEMENT DE MATÉRIAUX D'EMBALLAGE ET PROCÉDÉ DE FONCTIONNEMENT D'UNE MACHINE DE TRAITEMENT DE MATÉRIAUX D'EMBALLAGE

(30) Priority: 25.08.2021 EP 21193043
(43) Date of publication of application: 03.07.2024
(73) Proprietor: BOBST MEX SA, 1031 Mex (CH)
(72) Inventor: PYTHON, Gilbert, 1305 Penthalaz (CH); MALHERBE, Pierre, 1373 Chavornay (CH)
(74) Representative: Wagner, Sigrid
(86) International application number: PCT/EP2022/056614
(87) International publication number: WO 2023/025420

(56) References cited:
- EP-A1- 1 981 701
- DE-A1- 102007 014 313
- DE-A1- 102012 217 629
- DE-U1- 202007 008 897

## Description

The invention is directed to a packaging material processing machine as defined in claim 1 and to a method for operating a packaging material processing machine as defined in claim 9.

The packaging material processing machine comprises an upper processing tool and a lower processing tool, the upper processing tool and the lower processing tool being configured for interacting with each other in order to process the sheet material. The packaging material processing machine also has a drive unit comprising an electric machine and a flywheel, wherein at least one of the upper processing tool and the lower processing tool is coupled to the electric machine via the flywheel such that the at least one of the upper processing tool and the lower processing tool is movable in a reciprocating manner with respect to the other one of the upper processing tool and the lower processing tool. The packaging material processing machine further comprises an electrical supply unit being electrically connected to the electric machine such that the electric machine is operable as an electric motor.

Such packaging material processing machines and methods for operating a packaging material processing machine are known.

Very often, the electric machine being used in the packaging material processing machine is driven by an alternating current (AC). In this case, the electric machine may be designated an AC machine or AC motor. Example of AC motors include synchronous motors and asynchronous motors. For operating such AC motors at variable speed, the corresponding electrical supply units comprise frequency converters being able to convert a frequency of an AC electricity supply grid into a desired frequency for driving the AC motor. Such frequency converters may also be designated variable-frequency drives.

The flywheel is used for suppressing vibrations within the drive unit and may also be useful for smoothly passing dead centers in the reciprocating movement of at least one of the upper processing tool and the lower processing tool, e.g. a top dead center and/or a bottom dead center. This is especially the case if at least one of the upper processing tool and the lower processing tool is actuated via a toggle lever mechanism.

DE 10 2012 217 629 A1 shows a forging press which has a flywheel. The flywheel can be used for energy recovery.

Other mechanical presses are known from WO 2007/091935 A1 (& EP 1 981 701 A1) and DE 20 2007 008 897 A1.

The objective of the invention is to reduce the energy consumption of a packaging material processing machine of the type as mentioned above.

The problem is solved by a packaging material processing machine having the features of claim 1. The machine comprises an electrical energy recovery unit being electrically connected to the electric machine such that the energy recovery unit is able to store or transfer electrical energy provided by the electric machine operating as an electric generator, the flywheel being rigidly connected to the drive unit. The electric machine may be operated as an electric generator in situations in which the at least one of the upper processing tool and the lower processing tool is to be decelerated or stopped. This can be the case during processing of a sheet material or when terminating the processing. If the recovered electrical energy is stored within the energy recovery unit, it can be used at a later stage for operating the machine, e.g. actuating the drive unit. As a consequence thereof, less electrical energy needs to be provided to the packaging material processing machine. In other words, the energy efficiency of the packaging material processing machine increases. If the electrical energy is transferred elsewhere by the energy recovery unit, the transferred energy will be included into a balance of energy and, thus, considering this balance of energy, the overall consumption of the packaging material processing machine is reduced.

In known packaging material processing machines the drive units are equipped with braking resistors being electrically connected to the electric machine. If a rotational speed of the electric machine and/or the flywheel connected thereto is to be reduced or if the rotation of the electric machine is to be stopped, the excess energy is dissipated as heat by the braking resistors. Obviously, in a packaging material processing machine according to the invention, there is no need for dissipating excess kinetic energy as heat. Consequently, the thermal load to which the packaging material processing machine is subject, is reduced. This also reduces the risk of fire.

According to an embodiment, the energy recovery unit comprises an electric storage means. Accordingly, recovered energy can be stored and used subsequently. This reduces the overall energy consumption of the packaging material processing machine. The storage means for example comprises a capacitor and/or a battery.

The energy recovery unit may be connected to a direct current line of the electrical supply unit. The direct current line may be a direct current bus. Thus, the energy recovery unit is supplied with direct current. This is especially suitable, if the energy recovery unit comprises an electric storage means which usually is fed with direct current. However, it is also possible to transfer the direct current to a direct current consumer.

According to a variant, the energy recovery unit comprises an alternating-current converter. Thus, even though the energy recovery unit is supplied with direct current, it can be used for powering a consumer which operates on alternating current. Thus, the energy recovery unit can be used for a great variety of applications.

Moreover, it is possible that the energy recovery unit comprises a frequency converter. In this context, a frequency converter is understood as a device being able to convert an alternating current having a first power frequency into an alternating current having a second power frequency being different from the first power frequency. Such devices are also known as variable frequency transformers or variable frequency drives. Thus, the energy recovery unit can be used to supply consumers needing alternating current. In this context, the frequency required by the consumer can be adapted independently from the power frequency supplied by the electric machine operating as a generator.

The energy recovery unit may also comprise a connection means for electrically connecting the energy recovery unit to an electricity supply grid. Thus, the electrical energy provided by the electric machine operating as an electric generator can be used in any device connected to the electricity supply grid. Consequently, the amount electrical energy being fed to the electricity supply grid, e.g. by an external supplier, can be reduced.

In an embodiment, the packaging material processing machine has two or more drive units each comprising an electric machine and a flywheel, wherein the drive units are connected in parallel to the electrical energy recovery unit. Thus, the energy recovery unit can cooperate with more than one drive unit. This is structurally simple. Moreover, this solution is compact.

According to a variant, the upper processing tool and the lower processing tool are die cutting tools. Alternatively, the upper processing tool and the lower processing tool are hotfoil stamping tools. Consequently, the packaging material processing machine is a die cutting machine or a hotfoil stamping machine. In such machines at least one of the upper processing tool and the lower processing tool regularly needs to be decelerated or stopped. This is for example the case when a job is to be changed. Thus, die cutting machines and a hotfoil stamping machine offer a great potential to reduce the overall energy consumption which can be used by the energy recovery unit.

The problem is additionally solved by a method for operating a packaging material processing machine having the features of claim 9, wherein an electric machine and a flywheel rigidly coupled thereto are used for moving an upper processing tool and a lower processing tool with respect to each other in a reciprocating manner in order to process the sheet material. In an operational situation in which the flywheel is to be decelerated, the electric machine operates as an electric generator and the electric energy generated by the electric machine is stored or transferred to a supply grid or an electric consumer.

A situation in which the flywheel is to be decelerated includes a situation in which a rotation of the flywheel is to be stopped, i.e. decelerated until it does not rotate any more. Moreover, if the flywheel is to be decelerated, either the upper processing tool and the lower processing tool are uncoupled from the drive unit or at least one of the upper processing tool and the lower processing tool are to be decelerated as well. Thus, the kinetic energy of at least one of the upper processing tool and the lower processing tool and/or of the flywheel is recovered in the form of electric energy.

The invention will now be described with reference to the enclosed drawings. In the drawings,
- Figure 1 schematically shows a packaging material processing machine according to the invention,
- Figure 2 shows a detail of the packaging material processing machine of Figure 1 including three alternatives for an energy recovery unit, and
- Figure 3 shows an electric circuit diagram of a packaging material processing machine comprising three drive units.

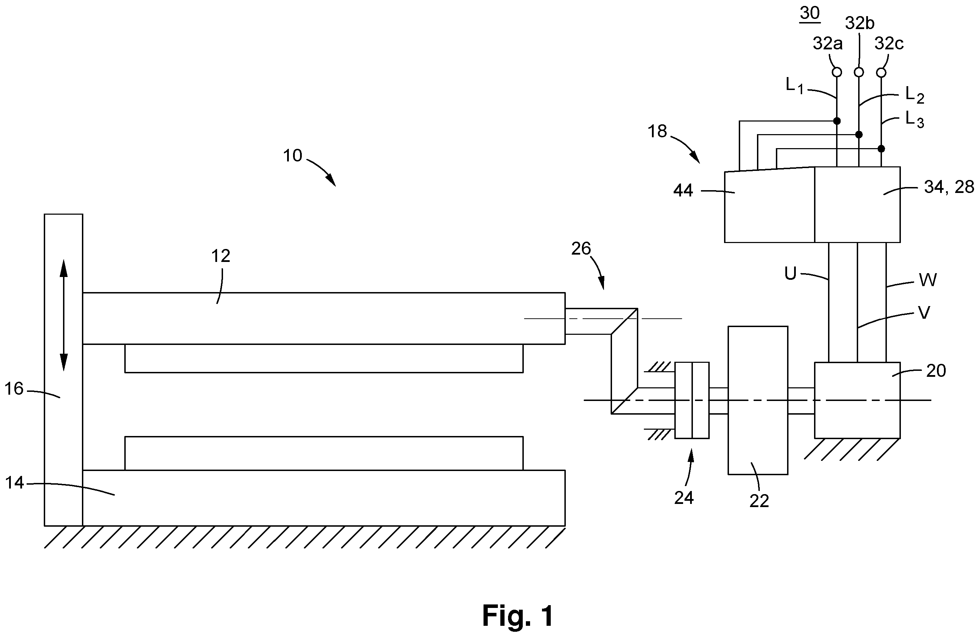

Figure 1 shows a packaging material processing machine 10.

The packaging material processing machine 10 comprises an upper processing tool 12 and a lower processing tool 14 which are configured for interacting with each other in order to process sheet material.

The packaging material processing machine 10 is for example a die cutting machine. In this case, the upper processing tool 12 and the lower processing tool 14 are die cutting tools.

Alternatively, the packaging material processing machine 10 is a hotfoil stamping machine. Then, the upper processing tool 12 and the lower processing tool 14 are hotfoil stamping tools.

In the present example, the lower processing tool 14 is fixed and the upper processing tool 12 is coupled to a vertical guiding means 16 such that in can move vertically with respect to the lower processing tool 14.

Furthermore, the upper processing tool 12 is coupled to a drive unit 18.

The drive unit 18 comprising an electric machine 20, a flywheel 22, a clutch means 24 and a toggle lever mechanism 26.

The electric machine 20 is adapted for providing a rotational driving power.

The clutch means 24 is adapted for selectively separating and selectively coupling the toggle lever mechanism 26 to the flywheel 22 and the electric machine 20.

The toggle lever mechanism 26 is configured for converting the rotational driving motion of the electric machine 20 into a vertically reciprocating movement of the upper processing tool 12.

The flywheel 22 is used for suppressing vibrations within the drive unit 18 and for smoothing the passage of the dead centers of the toggle lever mechanism 26.

Thus, in more detail, the upper processing tool 12 is coupled to the electric machine 20 via the flywheel 22, the clutch means 24 and the toggle lever mechanism 26 such that the upper processing tool 12 is vertically movable in a reciprocating manner with respect to the lower processing tool 14.

In order to suppress vibrations effectively, the flywheel 22 is rigidly connected to the shaft which connects the electric machine 20 with the toggle lever mechanism 26. The flywheel 22 is arranged between the electric machine 20 and the clutch means 24 so that the effect of the flywheel 22 is available regardless of the particular operating state of the packaging material processing machine.

The electric machine 20 is electrically connected to an electrical supply unit 28.

The electrical supply unit 28 is electrically connected to an electricity supply grid 30 of which only the electrical connections 32a, 32b and 32c are represented in Figure 1.

Thus, the electric machine 20 may operate as an electric motor if it is supplied with electricity being provided by the electricity supply grid 30 via the electrical supply unit 28.

The electric machine 20 has sufficient power to operate the toggle lever mechanism 26 and the upper tool 12. The flywheel is used, during normal operation of the packaging machine processing machine, only to suppress vibrations in the drive train from the electric machine 20 to the upper tool and not to store kinetic energy without which a proper operation of the upper tool 12 would not be possible.

In the example represented in the Figures, the electric machine 20 is an AC machine.

In order to be able to operate the electric machine 20 at varying speed, the electrical supply unit 28 comprises a variable-frequency converter 34.

The variable-frequency converter 34 is connected to the electricity supply grid 30 via three electric lines L1, L2, L3.

Each of the lines L1, L2, L3 is supplied with alternating current, e.g. at a frequency of 50Hz.

The variable-frequency converter 34 converts these currents into alternating currents of different frequency and/or amplitude being provided at lines U, V, W connecting the electrical supply unit 28 to the electric machine 20.

To this end, the variable-frequency converter 34 comprises a known circuit using a total of six diodes 36 which are attributed to the lines L1, L2, L3 in pairs respectively. Moreover, a total of six transistor devices 38 are connected to lines U, V, W in pairs respectively.

The variable-frequency converter 34 also comprises a so-called direct current bus 40 comprising a first direct current line 42a being a positive terminal and a second direct current line 42b being a negative terminal.

The packaging material processing machine 10 further comprises an electrical energy recovery unit 44 being electrically connected to the electric machine such that the energy recovery unit 44 is able to transfer electrical energy provided by the electric machine 20 operating as an electric generator to the electricity supply grid 30.

In more detail, the electrical energy recovery unit 44 is connected to the direct current bus 40 of the electrical supply unit 28 which serve as electricity input lines for the electrical energy recovery unit 44.

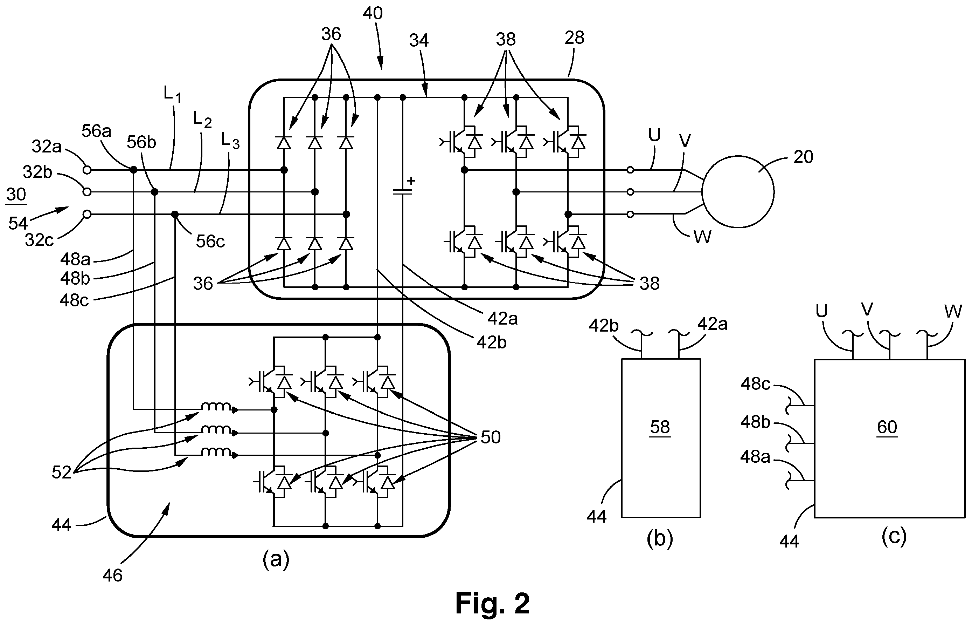

The electrical energy recovery unit 44 further comprises an alternating-current converter 46 for generating three phase alternating current being provided at electricity output lines 48a, 48b, 48c. To this end a known circuit comprising a total of six transistor devices 50 and three inductors 52 is used (cf. Figure 2 (a)).

The electrical energy recovery unit 44 further comprises a connection means 54 for electrically connecting the energy recovery unit 44 to an electricity supply grid 30. In the present example, the connection means 54 is comprised of three electrical connectors 56a, 56b, 56c connecting the electricity output lines 48a, 48b, 48c to the lines L1, L2, L3 respectively.

Figure 2 (b) shows a variant in which the energy recovery unit 44 comprises an electric storage means 58 which replaces the energy recovery unit 44 as shown in Figure 2 (a).

A further alternative is shown in Figure 2 (c), wherein the energy recovery unit 44 comprises a frequency converter 60.

In contrast to the example of Figure 2 (a), the energy recovery unit 44 now is connected to lines U, V, W instead of the direct current bus 40. As has been described in connection with the variable-frequency converter 34 of the electrical supply unit 28, alternating current of variable frequency can be provided at lines 48a, 48b, 48c.

During the operation of the packaging material processing machine 10, the energy recovery unit 44 is used in an operational situation in which the flywheel 22 is to be decelerated. This is the case if the flywheel 22 and the upper tool 12 are coupled via the clutch means 24 and a movement of the upper tool 12 needs to be decelerated or stopped.

Moreover, it is also possible that the flywheel 22 needs to be decelerated or stopped in an operational situation in which the upper tool 12 is uncoupled from the flywheel 22 using the clutch means 24.

In both alternatives, the electric machine 20 operates as an electric generator and the electric energy generated by the electric machine 20 is supplied to the electricity supply grid 30 (cf. alternatives of Figure 2 (a) and 2 (c)) or stored (cf. alternative of Figure 2 (b)).

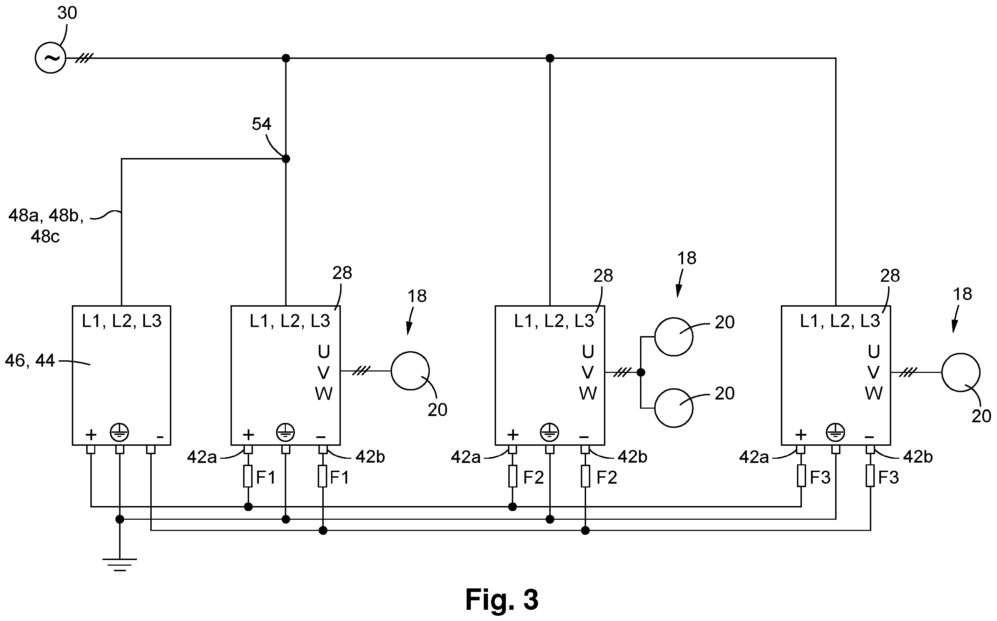

Figure 3 shows an electric circuit of an alternative embodiment in which a total of three drive units 18 are provided.

Each of the drive units 18 comprises one or two electric machines 20 and a flywheel (not represented in Figure 3).

The drive units are connected in parallel to the electrical energy recovery unit 44.

Beyond that, reference is made to the above explanations.

The energy recovery unit 44 of Figure 3 is configured as shown in Figure 2 (a).

## Claims

1. Packaging material processing machine (10), comprising
an upper processing tool (12) and a lower processing tool (14), the upper processing tool (12) and the lower processing tool (14) being configured for interacting with each other in order to process the sheet material,
a drive unit (18) comprising an electric machine (20) and a flywheel (22), wherein at least one of the upper processing tool (12) and the lower processing tool (14) is coupled to the electric machine (20) via the flywheel (22) such that the at least one of the upper processing tool (12) and the lower processing tool (14) is movable in a reciprocating manner with respect to the other one of the upper processing tool (12) and the lower processing tool (14), and
an electrical supply unit (28) being electrically connected to the electric machine (20) such that the electric machine (20) is operable as an electric motor,
wherein the packaging material processing machine further comprises an electrical energy recovery unit (44) being electrically connected to the electric machine (20) such that the energy recovery unit (44) is able to store or transfer electrical energy provided by the electric machine (20) operating as an electric generator, the flywheel (22) being rigidly connected to the drive unit (18), the kinetic energy of at least one of the upper processing tool and the lower processing tool and/or of the flywheel being recovered in the form of electric energy.

2. Packaging material processing machine (10) according to claim 1, **characterized in that** the energy recovery unit (44) comprises an electric storage means (58).

3. Packaging material processing machine (10) according to claim 1 or 2, **characterized in that** the energy recovery unit (44) is connected to a direct current line (42a, 42b) of the electrical supply unit (28).

4. Packaging material processing machine (10) according to claim 3, **characterized in that** the energy recovery unit (44) comprises an alternating-current converter (46).

5. Packaging material processing machine (10) according to any of the preceding claims, **characterized in that** the energy recovery unit (44) comprises a frequency converter (60).

6. Packaging material processing machine (10) according to any one of the preceding claims, **characterized in that** the energy recovery unit (44) comprises a connection means (54) for electrically connecting the energy recovery unit (44) to an electricity supply grid (30).

7. Packaging material processing machine (10) according to any one of the preceding claims, **characterized by** two or more drive units (18) each comprising an electric machine (20) and a flywheel (22), wherein the drive units (18) are connected in parallel to the electrical energy recovery unit (44).

8. Packaging material processing machine (10) according to any one of the preceding claims, **characterized in that** the upper processing tool (12) and the lower processing tool (14) are die cutting tools or **in that** the upper processing tool (12) and the lower processing tool (14) are hotfoil stamping tools.

9. Method for operating a packaging material processing machine (10), wherein an electric machine (20) and a flywheel (22) rigidly coupled thereto are used for moving an upper processing tool (12) and a lower processing tool (14) with respect to each other in a reciprocating manner in order to process the sheet material,
wherein in an operational situation in which the flywheel (22) is to be decelerated, the electric machine (20) operates as an electric generator and the electric energy generated by the electric machine (20) is stored or transferred to an electricity supply grid (30) or an electric consumer.

## Patentansprüche

1. Verpackungsmaterialbearbeitungsmaschine (10), umfassend
ein oberes Bearbeitungswerkzeug (12) und ein unteres Bearbeitungswerkzeug (14), wobei das obere Bearbeitungswerkzeug (12) und das untere Bearbeitungswerkzeug (14) dazu konfiguriert sind, miteinander zu interagieren, um das Blattmaterial zu bearbeiten,
eine Antriebseinheit (18) umfassend eine elektrische Maschine (20) und ein Schwungrad (22), wobei mindestens eines des oberen Bearbeitungswerkzeugs (12) und des unteren Bearbeitungswerkzeugs (14) über das Schwungrad (22) mit der elektrischen Maschine (20) gekoppelt ist, sodass sich das mindestens eine des oberen Bearbeitungswerkzeugs (12) und des unteren Bearbeitungswerkzeugs (14) relativ zum anderen hin- und herbewegen kann, und
eine elektrische Versorgungseinheit (28), die elektrisch mit der elektrischen Maschine (20) verbunden ist, sodass die elektrische Maschine (20) als Elektromotor betrieben werden kann,
wobei die Verpackungsmaterialbearbeitungsmaschine weiter eine elektrische Energierückgewinnungseinheit (44) umfasst, die elektrisch mit der elektrischen Maschine (20) verbunden ist, sodass die Energierückgewinnungseinheit (44) elektrische Energie speichern oder übertragen kann, die von der als elektrischer Generator arbeitenden elektrischen Maschine (20) bereitgestellt wird, wobei das Schwungrad (22) fest mit der Antriebseinheit (18) verbunden ist und die kinetische Energie mindestens eines der oberen Bearbeitungswerkzeugs und des unteren Bearbeitungswerkzeugs und/oder des Schwungrads in Form von elektrischer Energie zurückgewonnen wird.

2. Verpackungsmaterialbearbeitungsmaschine (10) nach Anspruch 1, **dadurch gekennzeichnet, dass** die Energierückgewinnungseinheit (44) ein elektrisches Speichermittel (58) umfasst.

3. Verpackungsmaterialbearbeitungsmaschine (10) nach Anspruch 1 oder 2, **dadurch gekennzeichnet, dass** die Energierückgewinnungseinheit (44) mit einer Gleichstromleitung (42a, 42b) der elektrischen Versorgungseinheit (28) verbunden ist.

4. Verpackungsmaterialbearbeitungsmaschine (10) nach Anspruch 3, **dadurch gekennzeichnet, dass** die Energierückgewinnungseinheit (44) einen Wechselstromumrichter (46) umfasst.

5. Verpackungsmaterialbearbeitungsmaschine (10) nach einem der vorstehenden Ansprüche, **dadurch gekennzeichnet, dass** die Energierückgewinnungseinheit (44) einen Frequenzumrichter (60) umfasst.

6. Verpackungsmaterialbearbeitungsmaschine (10) nach einem der vorstehenden Ansprüche, **dadurch gekennzeichnet, dass** die Energierückgewinnungseinheit (44) eine Verbindungseinrichtung (54) zum elektrischen Verbinden der Energierückgewinnungseinheit (44) mit einem Stromversorgungsnetz (30) umfasst.

7. Verpackungsmaterialbearbeitungsmaschine (10) nach einem der vorstehenden Ansprüche, **gekennzeichnet durch** zwei oder mehr Antriebseinheiten (18), die jeweils eine elektrische Maschine (20) und ein Schwungrad (22) umfassen, wobei die Antriebseinheiten (18) parallel mit der elektrischen Energierückgewinnungseinheit (44) verbunden sind.

8. Verpackungsmaterialbearbeitungsmaschine (10) nach einem der vorstehenden Ansprüche, **dadurch gekennzeichnet, dass** das obere Bearbeitungswerkzeug (12) und das untere Bearbeitungswerkzeug (14) Stanzwerkzeuge sind oder dass das obere Bearbeitungswerkzeug (12) und das untere Bearbeitungswerkzeug (14) Heißfolienprägewerkzeuge sind.

9. Verfahren zum Betreiben einer Verpackungsmaterialbearbeitungsmaschine (10), wobei eine elektrische Maschine (20) und ein daran fest gekoppeltes Schwungrad (22) dazu dienen, ein oberes Bearbeitungswerkzeug (12) und ein unteres Bearbeitungswerkzeug (14) in einer hin- und hergehenden Bewegung zueinander zu bewegen, um das Blattmaterial zu bearbeiten,
wobei in einer Betriebssituation, in der das Schwungrad (22) abgebremst werden soll, die elektrische Maschine (20) als elektrischer Generator arbeitet und die von der elektrischen Maschine (20) erzeugte elektrische Energie gespeichert oder an ein Stromversorgungsnetz (30) oder einen elektrischen Verbraucher übertragen wird.

## Revendications

1. Machine de traitement de matériau d'emballage (10), comprenant
un outil de traitement supérieur (12) et un outil de traitement inférieur (14), l'outil de traitement supérieur (12) et l'outil de traitement inférieur (14) étant configurés pour interagir l'un avec l'autre afin de traiter le matériau en feuille,
une unité d'entraînement (18) comprenant une machine électrique (20) et un volant d'inertie (22), dans laquelle au moins un de l'outil de traitement supérieur (12) et de l'outil de traitement inférieur (14) est couplé à la machine électrique (20) via le volant d'inertie (22) de telle sorte que le au moins un de l'outil de traitement supérieur (12) et de l'outil de traitement inférieur (14) puisse se déplacer selon un mouvement de va-et-vient par rapport à l'autre de l'outil de traitement supérieur (12) et de l'outil de traitement inférieur (14), et
une unité d'alimentation électrique (28) qui est raccordée électriquement à la machine électrique (20) de telle sorte que la machine électrique (20) puisse fonctionner comme un moteur électrique,
dans laquelle la machine de traitement de matériau d'emballage comprend en outre une unité de récupération d'énergie électrique (44) qui est raccordée électriquement à la machine électrique (20), de telle sorte que l'unité de récupération d'énergie (44) puisse stocker ou transférer l'énergie électrique fournie par la machine électrique (20) fonctionnant comme un générateur électrique, le volant d'inertie (22) étant raccordé rigidement à l'unité d'entraînement (18), l'énergie cinétique d'au moins un de l'outil de traitement supérieur et de l'outil de traitement inférieur et/ou du volant d'inertie étant récupérée sous forme d'énergie électrique.

2. Machine de traitement de matériau d'emballage (10) selon la revendication 1, **caractérisée en ce que** l'unité de récupération d'énergie (44) comprend un moyen de stockage électrique (58).

3. Machine de traitement de matériau d'emballage (10) selon la revendication 1 ou 2, **caractérisée en ce que** l'unité de récupération d'énergie (44) est raccordée à une ligne de courant continu (42a, 42b) de l'unité d'alimentation électrique (28).

4. Machine de traitement de matériau d'emballage (10) selon la revendication 3, **caractérisée en ce que** l'unité de récupération d'énergie (44) comprend un convertisseur de courant alternatif (46).

5. Machine de traitement de matériau d'emballage (10) selon l'une quelconque des revendications précédentes, **caractérisée en ce que** l'unité de récupération d'énergie (44) comprend un convertisseur de fréquence (60).

6. Machine de traitement de matériau d'emballage (10) selon l'une quelconque des revendications précédentes, **caractérisée en ce que** l'unité de récupération d'énergie (44) comprend un moyen de raccordement (54) pour raccorder électriquement l'unité de récupération d'énergie (44) à un réseau d'alimentation électrique (30).

7. Machine de traitement de matériau d'emballage (10) selon l'une quelconque des revendications précédentes, **caractérisée par** deux, ou plus, unités d'entraînement (18) comprenant chacune une machine électrique (20) et un volant d'inertie (22), dans laquelle les unités d'entraînement (18) sont raccordées en parallèle à l'unité de récupération d'énergie électrique (44).

8. Machine de traitement de matériau d'emballage (10) selon l'une quelconque des revendications précédentes, **caractérisée en ce que** l'outil de traitement supérieur (12) et l'outil de traitement inférieur (14) sont des outils de découpe ou **en ce que** l'outil de traitement supérieur (12) et l'outil de traitement inférieur (14) sont des outils d'estampage à chaud.

9. Procédé de fonctionnement d'une machine de traitement de matériau d'emballage (10), dans lequel une machine électrique (20) et un volant d'inertie (22) couplé rigidement à celle-ci sont utilisés pour déplacer un outil de traitement supérieur (12) et un outil de traitement inférieur (14) l'un par rapport à l'autre selon un mouvement de va-et-vient afin de traiter le matériau en feuille,
dans lequel, dans une situation opérationnelle dans laquelle le volant d'inertie (22) doit être décéléré, la machine électrique (20) fonctionne comme un générateur électrique et l'énergie électrique générée par la machine électrique (20) est stockée ou transférée à un réseau d'alimentation électrique (30) ou à un consommateur d'électricité.
